# EUROPÄISCHE PATENTANMELDUNG

(11) **EP 4 799 835 A1**
(43) Veröffentlichungstag der Anmeldung: **02.09.2026**
(21) Anmeldenummer: 26152878.0
(22) Anmeldetag: 20.01.2026
(51) Int. Cl.: B60J 7/20

(54) **CABRIOLET-FAHRZEUG**

(30) Priorität: 28.02.2025 DE 102025107716
(71) Anmelder: A. R. Systems Automotive GmbH, 74321 Bietigheim-Bissingen (DE); Dr. Ing. h.c. F. Porsche Aktiengesellschaft, 70435 Stuttgart (DE)
(72) Erfinder: Spychala, Pawel, 74354 Besigheim (DE); Kremer, Uwe, 71735 Eberdingen (DE); Bauer, Markus Alexander, 49201 Dissen a. T. W. (DE)
(74) Vertreter: Sturm, Christoph

(57) **Zusammenfassung**

Cabriolet-Fahrzeug, mit einem Verdeck, das zwischen einer Schließstellung und einer Öffnungsstellung verlagerbar ist, wobei ein Verdeckgestänge in der Schließstellung Gestängeöffnungen durchgreift, die in der Öffnungsstellung des Verdecks von Klappen (10) verschlossen und in der Schließstellung des Verdecks von den Klappen (10) freigegeben sind. Mit jeder Klappe (10) wirkt jeweils ein um ein Drehgelenk (11) schwenkbarer Verriegelungshebel (12) zusammen, wobei ein an einer ersten Seite des Drehgelenks (11) ausgebildeter Verriegelungsabschnitt (14) des Verriegelungshebels (12) in einer Verriegelungsposition eine Klappbewegung der jeweiligen Klappe (10) unterbindet und in einer Entriegelungsposition eine Klappbewegung der jeweiligen Klappe (10) zulässt. Mit jeder Klappe (10) wirkt jeweils ein Bowdenzug (13) zusammen, wobei ein Seil (17) des jeweiligen Bowdenzugs (13) mit einem ersten Ende am Verdeckgestänge und mit einem zweiten Ende an der jeweiligen Klappe (10) angreift, und wobei eine Hülle (18) für das Seil (17) des jeweiligen Bowdenzugs (13) mit einem Ende an einem an einer zweiten Seite des Drehgelenks (11) ausgebildeten Betätigungsabschnitt (19) des Verriegelungshebels (12) angreift.

## Beschreibung

Die Erfindung betrifft ein Cabriolet-Fahrzeug nach dem Oberbegriff des Anspruchs 1.

DE 10 2013 100 868 B4 offenbart ein Cabriolet-Fahrzeug mit einem Verdeck, das zwischen einer einen Fahrzeuginnenraum des Cabriolet-Fahrzeugs oben überspannende Schließstellung und einer den Fahrzeuginnenraum oben freigebenden Öffnungsstellung verlagerbar ist. Das dort offenbarte Cabriolet-Fahrzeug verfügt über ein Verdeckgestänge, das zur Verlagerung des Verdecks zwischen der Schließstellung und der Öffnungsstellung eingerichtet ist, wobei das Verdeckgestänge in der Schließstellung des Verdecks in einem Randbereich des Cabriolet-Fahrzeugs ausgebildete Gestängeöffnungen durchgreift, und wobei die Gestängeöffnungen in der Öffnungsstellung des Verdecks von Klappen verschlossen und in der Schließstellung des Verdecks von den Klappen freigegeben sind. Eine Verriegelungsanordnung sichert das Verdeck in der Ablagestellung, wobei die Verriegelungsanordnung über eine Koppelanordnung mit den Klappen verbunden ist. Bei der Koppelanordnung handelt es sich um einen Seilzug.

Aus EP 1 784 313 B1 und EP 1 630 023 B1 sind weitere Cabriolet-Fahrzeuge bekannt.

Insbesondere dann, wenn das Verdeck des Cabriolet-Fahrzeugs während der Fahrt zwischen der Schließstellung und der Öffnungsstellung bzw. zwischen der Öffnungsstellung und der Schließstellung überführt werden soll, wirken auf die Klappen durch einen Fahrtwind verursachte Kräfte, die dazu führen können, dass die jeweilige Klappe ungewollt in eine Schließposition überführt wird und hierbei mit dem Verdeckgestänge kollidiert, wodurch ein weiteres Öffnen oder Schließen des Verdecks blockiert wird. Dies ist von Nachteil. Es besteht demnach Bedarf daran, eine derart unerwünschte Kollision der Klappen mit dem Verdeckgestänge bei der Überführung des Verdecks zwischen der Schließstellung und der Öffnungsstellung bzw. zwischen der Öffnungsstellung und der Schließstellung zu vermeiden.

Aufgabe der Erfindung ist es, ein entsprechendes Cabriolet-Fahrzeug bereitzustellen.

Die Aufgabe wird durch ein Cabriolet-Fahrzeug mit den Merkmalen des Anspruchs 1 gelöst.

Erfindungsgemäß wirkt mit jeder Klappe jeweils ein um ein Drehgelenk schwenkbarer Verriegelungshebel und jeweils ein Bowdenzug zusammen. Ein an einer ersten Seite des Drehgelenks ausgebildeter Verriegelungsabschnitt des Verriegelungshebels unterbindet in einer Verriegelungsposition eine Klappbewegung der jeweiligen Klappe und lässt in einer Entriegelungsposition eine Klappbewegung der jeweiligen Klappe zu. Ein Seil des jeweiligen Bowdenzugs greift mit einem ersten Ende am Verdeckgestänge und mit einem zweiten Ende an der jeweiligen Klappe an, wobei eine Hülle für das Seil des jeweiligen Bowdenzugs mit einem Ende an einem an einer zweiten Seite des Drehgelenks ausgebildeten Betätigungsabschnitt des Verriegelungshebels angreift.

Durch das Zusammenwirken von Verriegelungshebel und Bowdenzug kann bei der Überführung des Verdecks zwischen der Schließstellung und der Öffnungsstellung sowie zwischen der Öffnungsstellung und der Schließstellung eine unerwünschte Kollision der Klappen mit dem Verdeckgestänge verhindert werden.

Vorzugsweise überführt ein jeweiliges erstes Federelement, welches am jeweiligen Verriegelungshebel angreift, den jeweiligen Verriegelungsabschnitt über eine jeweilige Federkraft in seine Verriegelungsposition. Dies ist besonders bevorzugt, um bei der Überführung des Verdecks zwischen der Schließstellung und der Öffnungsstellung bzw. zwischen der Öffnungsstellung und der Schließstellung eine unerwünschte Kollision der Klappen mit dem Verdeckgestänge zu vermeiden.

Vorzugsweise überführt ein jeweiliges zweites Federelement, welches an der jeweiligen Klappe angreift, die jeweilige Klappe über eine jeweilige Federkraft in ihre Öffnungsposition.

Insbesondere überführt dann, wenn eine Betätigungskraft des jeweiligen Bowdenzugs kleiner als ein von der Federkraft des jeweiligen ersten Federelements abhängiger erster Grenzwert ist, das jeweilige erste Federelement den jeweiligen Verriegelungsabschnitt in seine Verriegelungsposition, wohingegen dann, wenn die Betätigungskraft des jeweiligen Bowdenzugs größer der erste Grenzwert ist, der Bowdenzug den jeweiligen Verriegelungsabschnitt in Richtung auf seine Entriegelungsposition überführt. Insbesondere überführt dann, wenn eine Betätigungskraft des jeweiligen Bowdenzugs kleiner als ein von der Federkraft des jeweiligen zweiten Federelements abhängiger zweiter Grenzwert ist, das zweite Federelement die Klappe in ihre Öffnungsposition, wohingegen dann, wenn die Betätigungskraft des jeweiligen Bowdenzugs größer als der zweite Grenzwert ist, der jeweilige Bowdenzug die jeweilige Klappe in Richtung auf ihre Schließposition überführt. Der zweite Grenzwert ist größer als der erste Grenzwert. Diese Ausführung ist besonders bevorzugt, um bei der Überführung des Verdecks zwischen der Schließstellung und der Öffnungsstellung bzw. zwischen der Öffnungsstellung und der Schließstellung eine Kollision der Klappen mit dem Verdeckgestänge zu vermeiden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen Ausschnitt aus einem Cabriolet-Fahrzeug im Bereich einer eine Gestängeöffnung verschließenden Klappe des Cabriolet-Fahrzeugs in einer Blickrichtung in Fahrzeugquerrichtung,
- Fig. 2: den Ausschnitt der Fig. 1 in einer Blickrichtung in Fahrzeuglängsrichtung,
- Fig. 3: den Ausschnitt der Fig. 1 in einer Blickrichtung von schräg unten,
- Fig. 4: einen Querschnitt durch Fig. 2,
- Fig. 5: den Ausschnitt der Fig. 1 mit einer die Gestängeöffnung freigebenden Klappe,
- Fig. 6: den Ausschnitt der Fig. 5 in einer Blickrichtung in Fahrzeuglängsrichtung,
- Fig. 7: einen Querschnitt durch Fig. 6,
- Fig. 8: den Ausschnitt der Fig. 5 in einer Blickrichtung von schräg hinten,
- Fig. 9: ein Detail der Fig. 8.

Ein Cabriolet-Fahrzeug verfügt über ein Verdeck. Das Verdeck kann zwischen einer einen Fahrzeuginnenraum des Cabriolet-Fahrzeugs oben überspannenden Schließstellung und einer den Fahrzeuginnenraum des Cabriolet-Fahrzeugs oben freigebenden Öffnungsstellung verlagert werden.

Zur Verlagerung des Verdecks zwischen der Schließstellung und der Öffnungsstellung dient ein Verdeckgestänge, das zur Verlagerung des Verdecks zwischen der Schließstellung und der Öffnungsstellung bzw. zwischen der Öffnungsstellung und der Schließstellung eingerichtet ist.

Dann, wenn sich das Verdeck in der Schließstellung befindet, durchgreift das Verdeckgestänge in einem Randbereich des Cabriolet-Fahrzeugs ausgebildete Gestängeöffnungen. Diese Gestängeöffnungen sind in der Öffnungsstellung des Verdecks, in welcher das Verdeck den Fahrzeuginnenraum oben freigibt, von Klappen 10 verschlossen. In der Schließstellung des Verdecks, in welcher das Verdeck den Fahrzeuginnenraum oben überspannt, geben die Klappen 10 die Gestängeöffnungen für den Durchtritt bzw. das Durchgreifen des Verdeckgestänges frei.

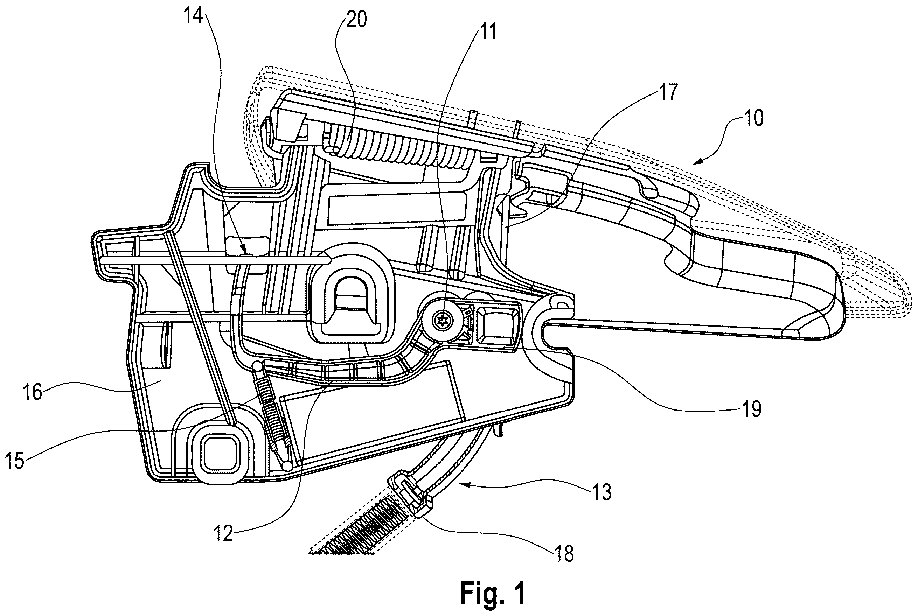

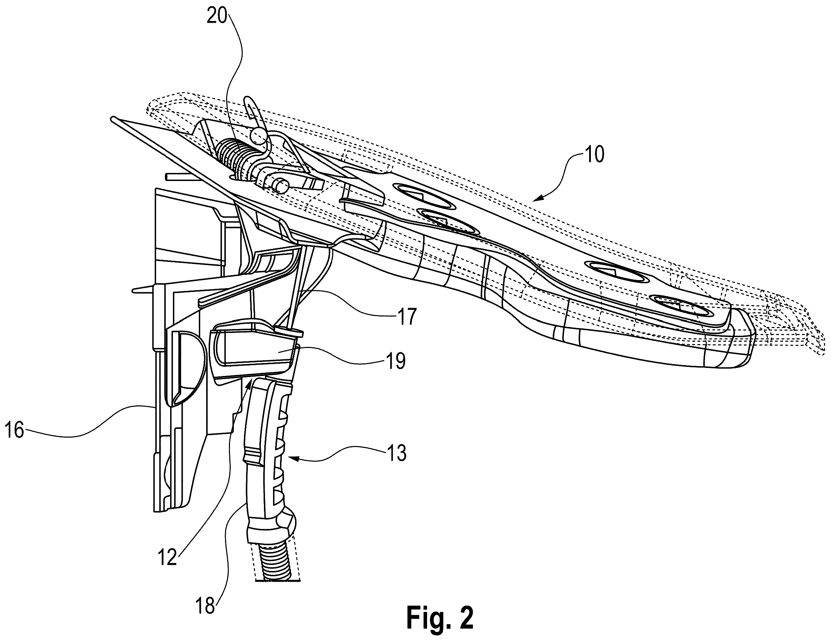

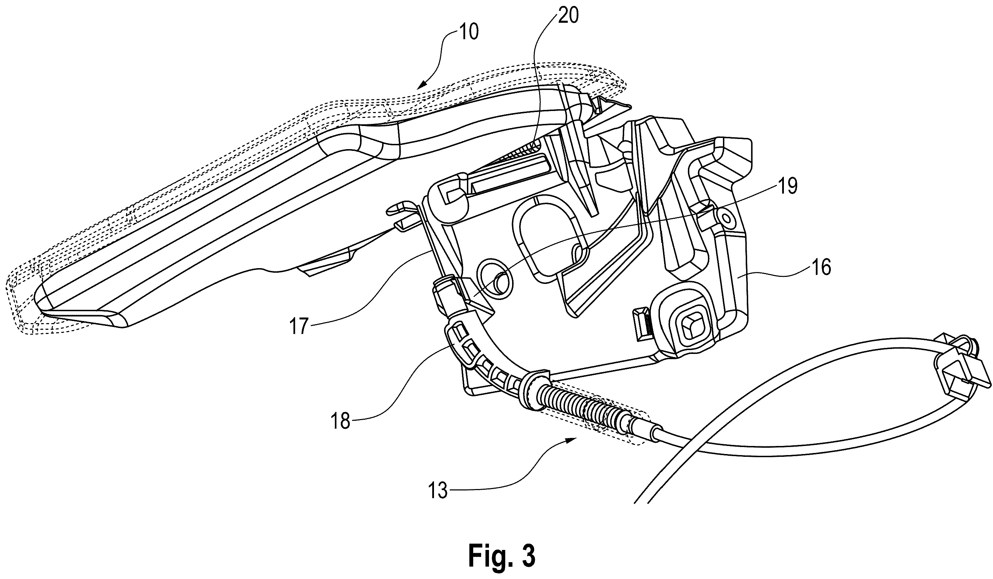

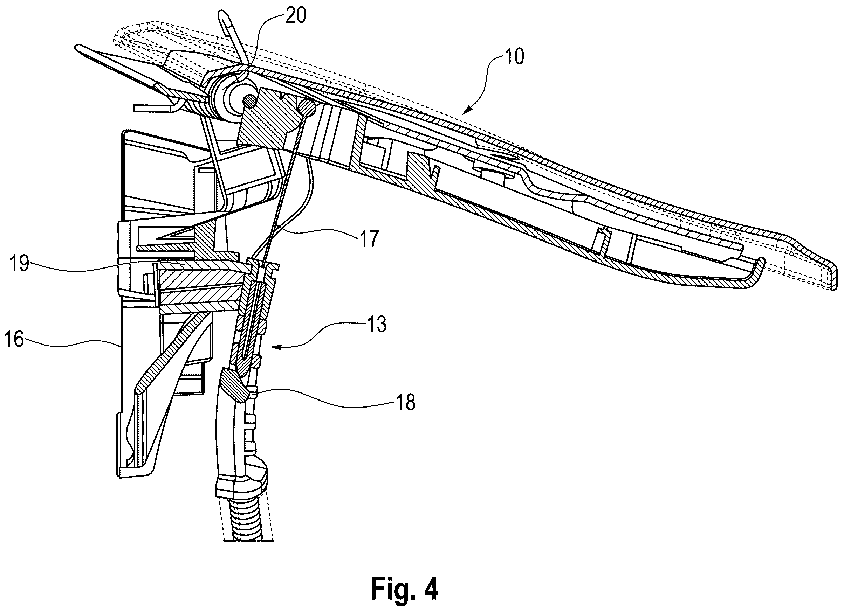

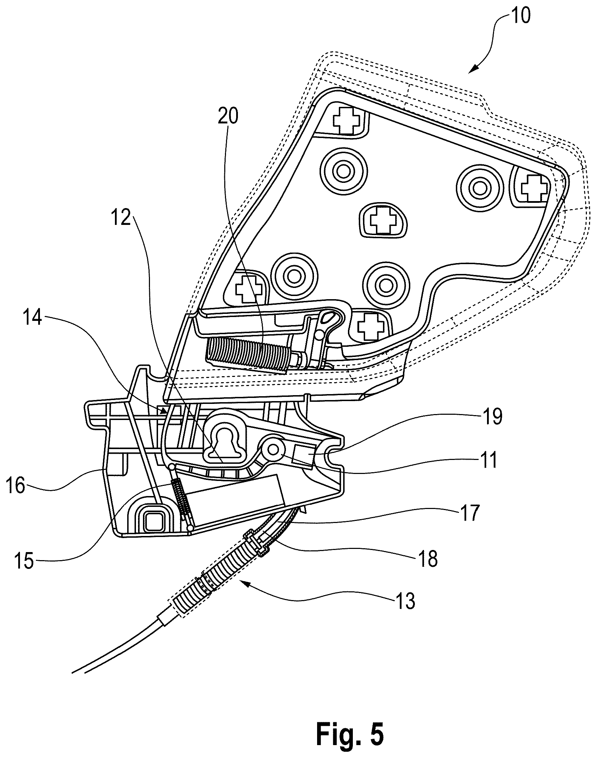

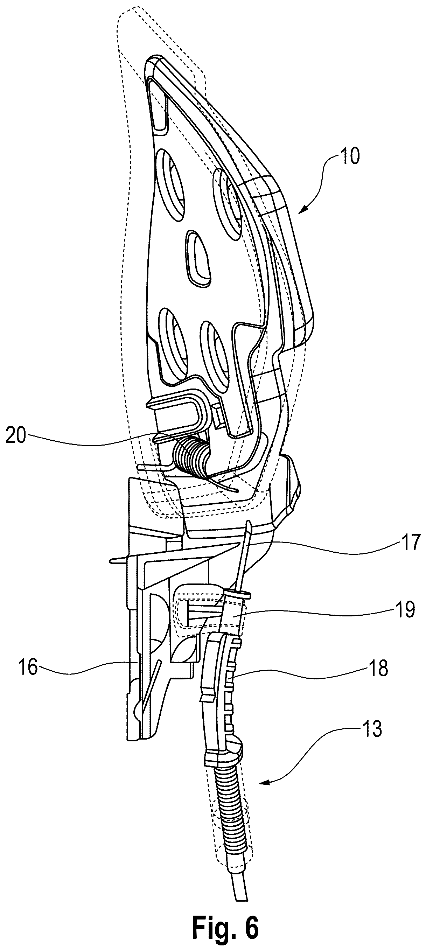

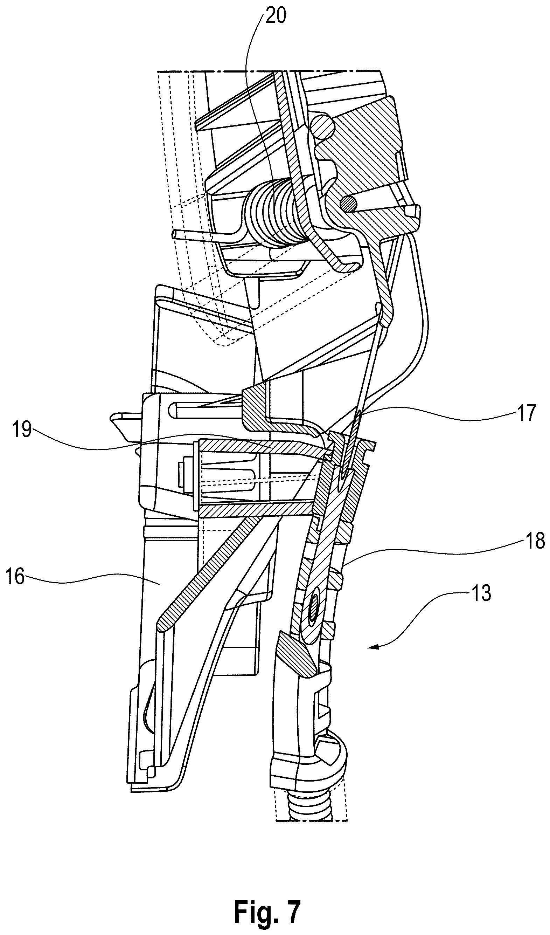

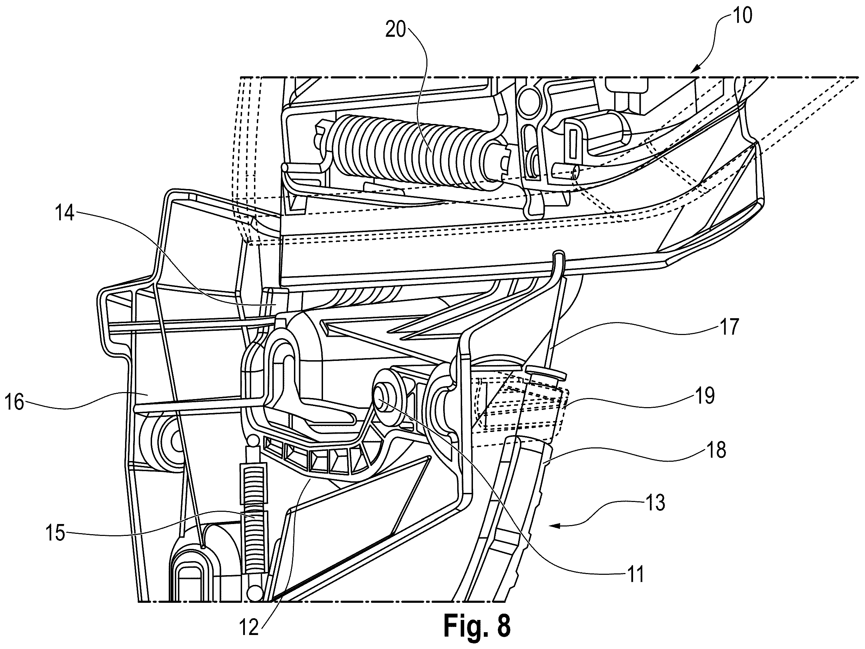

Fig. 1 bis 9 zeigen jeweils unterschiedliche Ansichten eines Ausschnitts aus einem Cabriolet-Fahrzeug im Bereich einer solchen Klappe 10 zum Verschließen oder Freigeben der Gestängeöffnungen, wobei in Fig. 1, 2, 3 und 4 die jeweils gezeigte Klappe 10 eine Schließposition einnimmt, in welcher bei geöffnetem Verdeck die Klappe 10 eine jeweilige Gestängeöffnung oben verschließt. In Fig. 5, 6, 7 und 8 ist eine Klappe 10 in einer Öffnungsposition gezeigt, welche die Klappe dann einnimmt, wenn das Verdeck des Cabriolet-Fahrzeugs die Schließstellung einnimmt, um dann die jeweilige Gestängeöffnung für das Durchgreifen des Verdeckgestänges freizugeben.

Mit jeder Klappe 10, die dem Freigeben oder Verschließen einer jeweiligen Gestängeöffnung dient, wirkt einerseits ein um ein Drehgelenk 11 schwenkbarer Verriegelungshebel 12 und andererseits ein Bowdenzug 13 zusammen.

An einer ersten Seite des Drehgelenks 11 ist am Verriegelungshebel 12 ein Verriegelungsabschnitt 14 ausgebildet, der in einer Verriegelungsposition des Verriegelungshebels 12 eine Klappbewegung der jeweiligen Klappe 10 unterbindet und der in einer Entriegelungsposition eine Klappbewegung der jeweiligen Klappe 10 zulässt.

Ein erstes Federelement 15, welches am jeweiligen Verriegelungshebel 12 angreift, überführt den jeweiligen Verriegelungsabschnitt 14 über die jeweilige Federkraft des jeweiligen ersten Federelements 15 in seine Verriegelungsposition. Das erste Federelement 15 greift dabei gemäß den Figuren einerseits am Verriegelungshebel 12 im Bereich einer ersten Seite des Drehgelenks 11 an, ebenso an einem ortsfesten Grundkörper 16, gegenüber welchem der Verriegelungshebel 12 um das Drehgelenk 11 verlagerbar ist. Das erste Federelement 15 ist dabei im gezeigten Ausführungsbeispiel als Druckfeder ausgebildet, die den Verriegelungshebel 12 in seine Verriegelungsposition drückt.

Der ebenfalls mit der jeweiligen Klappe 10 zusammenwirkende Bowdenzug 13 weist ein Seil 17 auf, welches mit einem ersten Ende an einem nicht gezeigten Verdeckgestänge und mit einem zweiten Ende an der jeweiligen Klappe 10 angreift.

Ferner weist der jeweilige Bowdenzug 13 eine Hülle 18 für das Seil 17 desselben auf, die mit einem Ende an einem an einer zweiten Seite des Drehgelenks 11 ausgebildeten Betätigungsabschnitt 19 des Verriegelungshebels 12 angreift. Am gegenüberliegenden Ende greift die Hülle 18 des Bowdenzugs 13 vorzugsweise am nicht gezeigten Verdeckgestänge an.

Mit jeder Klappe 10 wirkt weiterhin jeweils ein zweites Federelement 20 zusammen. Dieses zweite Federelement 20 greift an der jeweiligen Klappe 10 an und ist dazu eingerichtet, über eine jeweilige Federkraft desselben die jeweilige Klappe 20 in ihre in Fig. 5 bis 8 gezeigte Öffnungsposition zu überführen, in welcher dieselbe eine jeweilige Gestängeöffnung freigibt. Das jeweilige zweite Federelement 20 greift einerseits an der jeweiligen Klappe 10 und andererseits am jeweiligen Grundkörper 16 an.

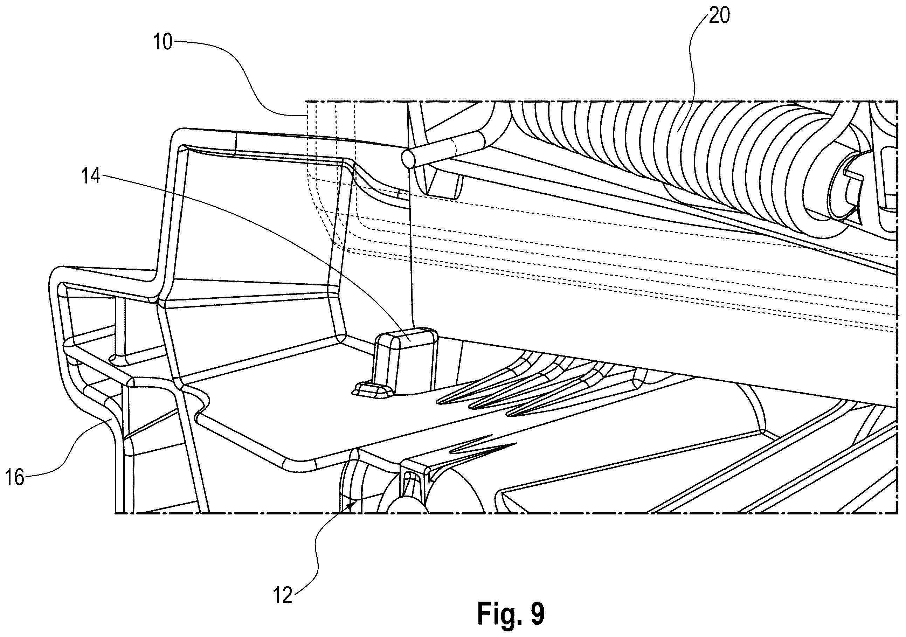

Dann, wenn die jeweilige Klappe 10 ihre Öffnungsposition gemäß Fig. 5 bis 8 einnimmt und für den Durchtritt des Verdeckgestänges die jeweilige Gestängeöffnung freigibt, ist der Bowdenzug 13 entspannt, sodass über das Seil 17 keine Kraft auf die jeweilige Klappe 10 ausgeübt wird. Ferner wird dann, wenn der Bowdenzug 13 entspannt ist, über die Hülle 18 keine Kraft auf den Betätigungsabschnitt 19 des Verriegelungshebels 12 ausgeübt, wodurch dann das erste Federelement 15 den Verriegelungshebel 12 in seine Verriegelungsposition überführt, sodass, wie am besten Fig. 9 entnommen werden kann, der Verriegelungsabschnitt 14 des Verriegelungshebels 12 einen Abschnitt an der Klappe 10 überdeckt und so eine Klappbewegung der Klappe 10 unterbindet.

Soll die Klappe 10 ausgehend von der in Fig. 5 bis 8 gezeigten Öffnungsposition in die in Fig. 1 bis 4 gezeigte Schließposition überführt werden, insbesondere um das Verdeck von der Schließstellung in die Öffnungsstellung zu überführen, so wird über den Bowdenzug 13, der mit dem Verdeckgestänge gekoppelt ist, eine Betätigungskraft bereitgestellt. Die am Betätigungsabschnitt 19 des Verriegelungshebels 12 angreifende Hülle 18 des Bowdenzugs 13 wirkt in Art eines Gegenlagers, wobei dann, wenn die Betätigungskraft des jeweiligen Bowdenzugs 13 kleiner als ein von der Federkraft des jeweiligen ersten Federelements 15 abhängiger erster Grenzwert ist, das erste Federelement 15 nach wie vor den jeweiligen Verriegelungsabschnitt 14 des Verriegelungshebels 12 in seine Verriegelungsposition drückt und eine Klappbewegung der jeweiligen Klappe 10 unterbindet.

Wird die Betätigungskraft des jeweiligen Bowdenzugs 13 größer als der von der Federkraft des ersten Federelements 15 abhängige erste Grenzwert, so überführt der jeweilige Bowdenzug 13 den Verriegelungsabschnitt 14 in Richtung auf seine Entriegelungsposition, um so die Klappbewegung der jeweiligen Klappe 10 freizugeben, wobei hierzu der Bowdenzug 13, nämlich die sich über die Hülle 18 desselben am Betätigungsabschnitt 19 des Verriegelungshebels 12 abstützende Betätigungskraft den Verriegelungshebel 12 um das Drehgelenk 11 verlagert.

Solange die Betätigungskraft des Bowdenzugs 13 größer als der erste Grenzwert jedoch kleiner als ein von der Federkraft des jeweiligen zweiten Federelements 20 abhängiger zweiter Grenzwert ist, überführt das jeweilige zweite Federelement 20 die Klappe 10 in ihre Öffnungsposition, wobei dann, wenn die Betätigungskraft des jeweiligen Bowdenzugs 13 größer als der von der Betätigungskraft des zweiten Federelements 20 abhängige zweite Grenzwert ist, der jeweilige Bowdenzug 13 die jeweilige Klappe 10 in Richtung auf ihre Schließposition überführt.

Der zweite Grenzwert für die Betätigungskraft des jeweiligen Bowdenzugs 13 ist dabei größer als der erste Grenzwert für die Betätigungskraft des Bowdenzugs 13.

Dann, wenn der Verriegelungshebel 12, nämlich dessen Verriegelungsabschnitt 14, die Verriegelungsposition einnimmt, ist demnach der Bowdenzug 13 entspannt und der Verriegelungshebel 12 ist durch das jeweilige erste Federelement 15 in seine Verriegelungsposition gedrückt. Eine Klappbewegung der jeweiligen Klappe 10 ist dann nicht möglich. Soll das Verdeck des Cabriolet-Fahrzeugs geöffnet werden, so beginnt das Verdeckgestänge des Verdecks am Seil 17 des Bowdenzugs 13 zu ziehen, wodurch dann, wenn die Betätigungskraft größer als der oben beschriebene erste Grenzwert ist, zunächst der Verriegelungshebel 12 um das Drehgelenk 11 verschwenkt wird und derselbe in die Entriegelungsposition überführt wird. In der Entriegelungsposition ist dann eine Klappbewegung der jeweiligen Klappe 10 möglich, die dann erfolgt, wenn die Kraft am Seil 17 des Bowdenzugs 13 größer als der oben beschriebene zweite Grenzwert wird.

Dann, wenn die Klappe 10 ihre Schließposition einnimmt und die jeweilige Gestängeöffnung verschließt, ist das Seil 17 des Bowdenzugs 13 durch das Verdeckgestänge gespannt und zieht die Klappe 10 in ihre Schließposition.

Gemäß der Erfindung ist demnach die Klappbewegung einer jeweiligen Klappe 10 durch den jeweiligen Bowdenzug 13 an die Bewegung des Verdeckgestänges gekoppelt, wobei durch die erfindungsgemäße Ausgestaltung, nämlich durch das Zusammenwirken des Verriegelungshebels 12 und des Bowdenzugs 13 verhindert wird, dass bei einer dynamischen Verlagerung des Verdecks während der Fahrt die jeweilige Klappe 10 infolge von auf die jeweilige Klappe 10 wirkenden Fahrtwinden entgegen der Federkraft des zweiten Federelements 20 eine Klappbewegung ausführt und mit dem Verdeckgestänge kollidiert. Über den Bowdenzug 13 wird die Klappbewegung der Klappe 10 erst dann freigegeben, wenn keine Gefahr mehr besteht, dass infolge einer Klappbewegung der jeweiligen Klappe 10 dieselbe mit dem Verdeckgestänge kollidiert.

## Patentansprüche

1. Cabriolet-Fahrzeug,
mit einem Verdeck, das zwischen einer einen Fahrzeuginnenraum des Cabriolet-Fahrzeugs oben überspannenden Schließstellung und einer den Fahrzeuginnenraum oben freigebenden Öffnungsstellung verlagerbar ist,
mit einem Verdeckgestänge, das zur Verlagerung des Verdecks zwischen der Schließstellung und der Öffnungsstellung eingerichtet ist,
wobei das Verdeckgestänge in der Schließstellung des Verdecks in einem Randbereich des Cabriolet-Fahrzeugs ausgebildete Gestängeöffnungen durchgreift, und
wobei die Gestängeöffnungen in der Öffnungsstellung des Verdecks von Klappen (10) verschlossen und in der Schließstellung des Verdecks von den Klappen (10) freigegeben sind,
**dadurch gekennzeichnet, dass**
mit jeder Klappe (10) jeweils ein um ein Drehgelenk (11) schwenkbarer Verriegelungshebel (12) zusammenwirkt,
ein an einer ersten Seite des Drehgelenks (11) ausgebildeter Verriegelungsabschnitt (14) des Verriegelungshebels (12) in einer Verriegelungsposition eine Klappbewegung der jeweiligen Klappe (10) unterbindet und in einer Entriegelungsposition eine Klappbewegung der jeweiligen Klappe (10) zulässt,
mit jeder Klappe (10) jeweils ein Bowdenzug (13) zusammenwirkt,
ein Seil (17) des jeweiligen Bowdenzugs (13) mit einem ersten Ende am Verdeckgestänge und mit einem zweiten Ende an der jeweiligen Klappe (10) angreift,
eine Hülle (18) für das Seil (17) des jeweiligen Bowdenzugs (13) mit einem Ende an einem an einer zweiten Seite des Drehgelenks (11) ausgebildeten Betätigungsabschnitt (19) des Verriegelungshebels (12) angreift.

2. Cabriolet-Fahrzeug nach Anspruch 1, **dadurch gekennzeichnet, dass** ein jeweiliges erstes Federelement (15), welches am jeweiligen Verriegelungshebel (12) angreift, den jeweiligen Verriegelungsabschnitt (14) über eine jeweilige Federkraft in seine Verriegelungsposition überführt.

3. Cabriolet-Fahrzeug nach Anspruch 2, **dadurch gekennzeichnet, dass** dann, wenn eine Betätigungskraft des jeweiligen Bowdenzugs (13) kleiner als ein von der Federkraft des jeweiligen ersten Federelements (15) abhängiger erster Grenzwert ist, das erste Federelement (15) den jeweiligen Verriegelungsabschnitt (14) in seine Verriegelungsposition überführt.

4. Cabriolet-Fahrzeug nach Anspruch 3, **dadurch gekennzeichnet, dass** dann, wenn die Betätigungskraft des jeweiligen Bowdenzugs (13) größer der erste Grenzwert ist, der jeweilige Bowdenzug (13) den jeweiligen Verriegelungsabschnitt (14) in Richtung auf seine Entriegelungsposition überführt.

5. Cabriolet-Fahrzeug nach einem der Ansprüche 1 bis 4, **dadurch gekennzeichnet, dass** ein jeweiliges zweites Federelement (20), welches an der jeweiligen Klappe (10) angreift, die jeweilige Klappe (10) über eine jeweilige Federkraft in ihre Öffnungsposition überführt.

6. Cabriolet-Fahrzeug nach Anspruch 5, **dadurch gekennzeichnet, dass** dann, wenn eine Betätigungskraft des jeweiligen Bowdenzugs (13) kleiner als ein von der Federkraft des jeweiligen zweiten Federelements (20) abhängiger zweiter Grenzwert ist, das zweite Federelement (20) die Klappe (10) in ihre Öffnungsposition überführt.

7. Cabriolet-Fahrzeug nach Anspruch 6, **dadurch gekennzeichnet, dass** dann, wenn die Betätigungskraft des jeweiligen Bowdenzugs (13) größer als der zweite Grenzwert ist, der jeweilige Bowdenzug (13) die jeweilige Klappe (10) in Richtung auf ihre Schließposition überführt.

8. Cabriolet-Fahrzeug nach Anspruch 3 oder 4 und nach Anspruch 6 oder 7, **dadurch gekennzeichnet, dass** der zweite Grenzwert größer als der erste Grenzwert ist.
